# EUROPEAN PATENT SPECIFICATION

(11) **EP 1 612 133 B1**
(45) Date of publication and mention of the grant of the patent: **29.12.2010**
(21) Application number: 05014222.3
(22) Date of filing: 30.06.2005
(51) Int. Cl.: B62K 21/02

(54) **Motorcycle**
Motorrad
Motocyclette

(30) Priority: 30.06.2004 JP 2004194546
(43) Date of publication of application: 04.01.2006
(73) Proprietor: Yamaha Hatsudoki Kabushiki Kaisha, Iwata-shi, Shizuoka-ken (JP)
(72) Inventor: Kawase, Masao, Iwata-shi Shizuoka-ken (JP)
(74) Representative: Grünecker, Kinkeldey, Stockmair & Schwanhäusser Anwaltssozietät

(56) References cited:
- DE-A1- 19 847 025
- DE-U1- 29 820 167
- JP-A- 6 329 070
- JP-A- 63 082 890

## Description

The present invention relates to a motorcycle according to the preamble portion of claim 1. Such a motorcycle can be taken from the prior art document JP 06 329070 A.

A body frame of a motorcycle is exposed forming part of the external appearance of the motorcycle body. It is therefore desirable that the welded areas in it are inconspicuous. Further, the number of such welded areas had better be less in order to reduce the production cost and to simplify the manufacturing process. One example of the body frame that meets such requirements is disclosed in JP-Hei 6-86231 B.

In a body frame disclosed in JP-Hei 6-86231 B, a frame member is formed by casting with less number of welded points. Thus, the external appearance of the body frame is not degraded, while reduction of production cost is attained.

The body frame is of so-called diamond type, composed of a half on the left side of the motorcycle body and another half on the right part of the motorcycle body, both being molded by die-casting. Each of the halves has a head pipe portion for holding the head pipe, a main frame extending rearward in a descending manner, a rear arm bracket extending downward from the rear end of the main frame, and a stay protruding downward in midway of the main frame for supporting an engine. Assembly is made by mating and tightening them with each other by bolts.

Each head pipe portion has a fastening portion that protrudes forward of the motorcycle body. Both fastening portions are mated with each other. The head pipe portion is assembled by tightening up the mated fastening portions by bolts.

On the other hand, a motorcycle might be equipped with a handle stopper for restricting the rotatable range of a front fork. An example of conventional handle stopper is described in JP-Sho 63-98890 U.

The handle stopper exhibited in JP-Sho 63-98890 U is composed of a handle stopper body provided at the lower end of the head pipe so as to protrude forward of the motorcycle body, and an engagement piece protruding from an underbracket of the front fork so as to abut on the handle stopper body. The engagement piece is located apart from a pivotal center of the underbracket (front fork) by a given distance. This enables the handle stopper body to abut on the engagement piece at its front end.

A problem takes place regarding the construction of the handle stopper when a motorcycle is manufactured employing the right and left separate-type body frame as described in JP-Hei 06-086231 B. This is because the fastening portions are formed in the head pipe of the right and left separate-type body frame so as to protrude forward of the motorcycle body. If the handle stopper described in JP-Sho-63-09880 U is employed, then the handle stopper body has to be protruded forward further from the fastening portion. Since the handle stopper body is substantially protruded from the head pipe area in the forward direction of the motorcycle body, a headlight must be disposed in the forwardly offset position in order to avoid interference with the handle stopper body. Thus, when the right and left separate-type body frame is employed in manufacturing the motorcycle, the headlight is located separately ahead of the body frame. This resulted in an issue of increase in body size in the fore-and-aft direction.

The present invention has been contrived to deal with such issues, and it is, therefore, an object to provide **a motorcycle as indicated above having** a compact motorcycle body in the fore-and-aft direction by disposing the headlight in a position closer to the body frame, while employing the right and left separate-type body frame.

According to the present invention said object is solved by a motorcycle having the features of independent claim 1. Preferred embodiments are laid down in the dependent claims. accordingly, it is provided a motorcycle comprising a body frame and a steering angle restricting means, wherein the steering angle restricting means comprises a handle stopper body projecting from a head pipe of the body frame and a recessed engagement section engageable with the handle stopper body formed in a front fork.

The body frame comprises a right and left separate-type body frame, wherein the handle stopper body of the steering angle restricting means is projecting from a fastening portion of a connecting section of the body frame.

The connecting section is joined to a head pipe half on a left part of the motorcycle body and a head pipe half on a right part of the motorcycle body, the connecting section having the fastening portion provided on each head pipe half in a protruding manner in fore-and-aft direction, and connecting bolts penetratingly inserted into the fastening portions.

Preferably, the head pipe is formed so that the left half and the right half are joined with each other to constitute a head pipe, wherein the left and the right head pipe halves are joined by connecting each of a plurality of corresponding fastening portions provided at the front end of each head pipe half with a connecting bolt, and at the same time connecting each of a plurality of corresponding fastening portions provided at the rear end of each head pipe half with a connecting bolt.

Beneficially, the handle stopper body is provided in a protruding manner at the connecting section and projecting vertically from the fastening portion, and the engagement section is provided in a front fork that the handle stopper body engages.

Further, beneficially the handle stopper body is formed integrally with a lowest front-end fastening portion among the plurality of front-end fastening portions provided on both of the head pipe halves.

Acording to a preferred embodiment, the handle stopper body is provided on each of the fastening portions on the right part and the left part of the motorcycle body. Therein, it is preferable if the left side face of the handle stopper body on the left part of the motorcycle body and the right side face of the handle stopper body on the right part of the motorcycle body are engaged with the engagement section that includes two steps separately provided in the front fork. And, it is further preferably if the handle stopper body on the left part of the motorcycle body and the handle stopper body on the right part of the motorcycle body are in contact with each other. Moreover, it is yet further preferable if a contact face for abutting the handle stopper body on the left part of the motorcycle body and the same on the right part of the motorcycle body is aligned in the identical plane with the mating face of the head pipe half on the left part of the motorcycle body and the same on the right part of the motorcycle body.

According to another preferred embodiment, the handle stopper body protrudes downward from the fastening portion, and the engagement section is provided on the underbracket of the front fork. Therein, it is preferable if the handle stopper body is formed to protrude downward from the head pipe half, and the engagement section to engage with the handle stopper body has a recess formed in the underbracket of the front fork and opening upward, with the handle stopper body being inserted in it from above.

In the following, the present invention is explained in greater detail with respect to several embodiments thereof in conjunction with the accompanying drawings, wherein:
- Fig. 1: is a side view of a motorcycle according to an embodiment;
- Fig. 2: is a front elevation view of a motorcycle according to this embodiment;
- Fig. 3: is a top plan view of a body frame employed in a motorcycle according to this embodiment;
- Fig. 4: is a side view of a body frame employed in a motorcycle according to this embodiment;
- Fig. 5: is a side view of a main frame member;
- Fig. 6: shows a front half of a down tube;
- Fig. 7: shows a rear half of a down tube;
- Fig. 8: is an enlarged view of a head pipe area;
- Fig. 9: is a cross-sectional view of exhibit Fig. 5;
- Fig. 10: is a cross-sectional view, along the line X-X of the head pipe half in Fig. 5;
- Fig. 11: is a cross-sectional view, along the line XI-XI of the head pipe half in Fig. 5;
- Fig. 12: is a cross-sectional view, along the line XII-XII of the head pipe half in Fig. 5;
- Fig. 13: is a top plan view of an underbracket;
- Fig. 14: is a front elevation view of an underbracket; and
- Fig. 15: is a perspective view of a main frame member.

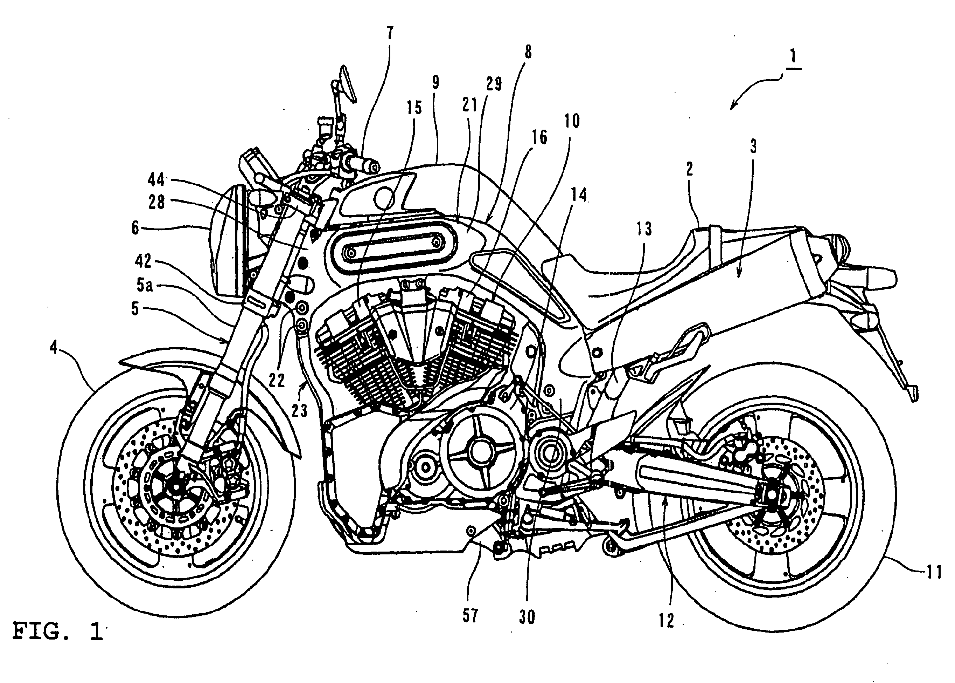

An embodiment of a motorcycle will be described in detail, referring to Fig. 1 through Fig. 15, in which:

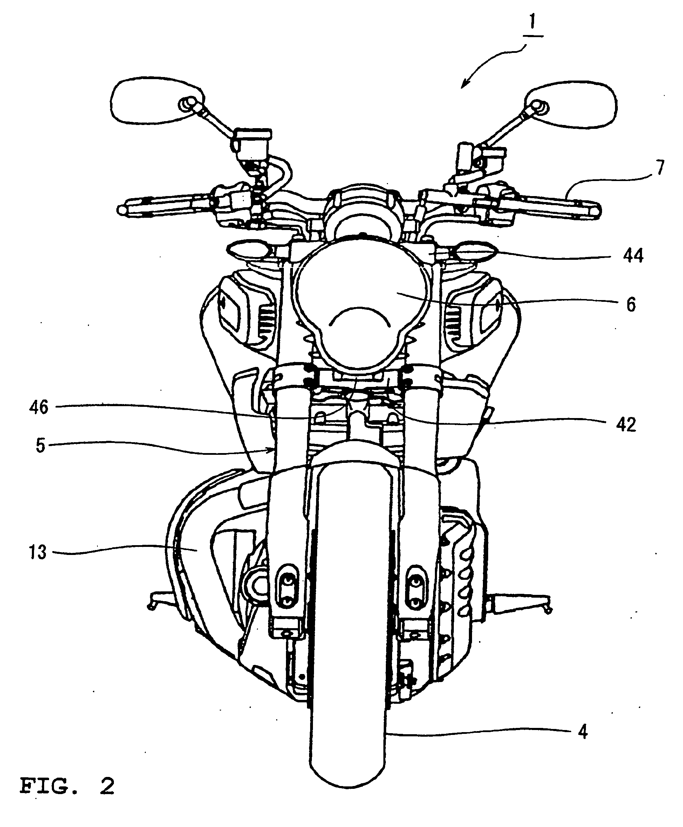

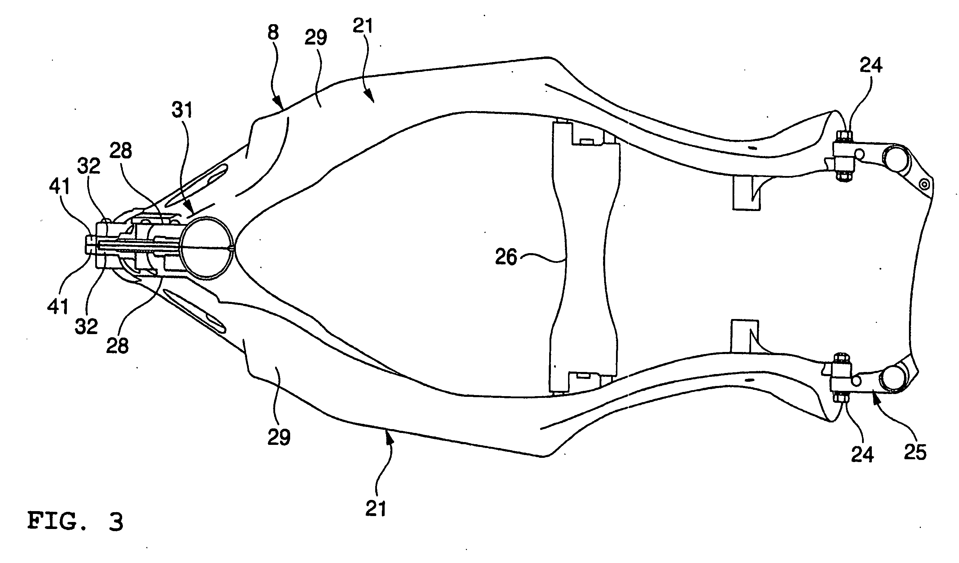

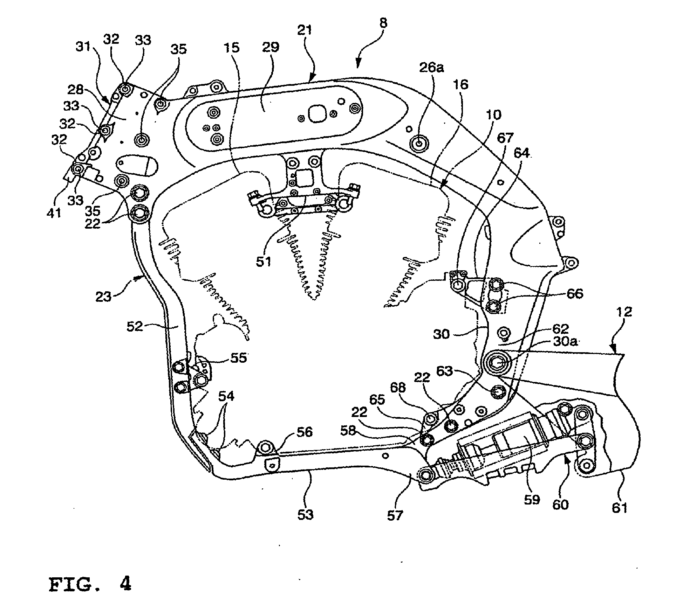

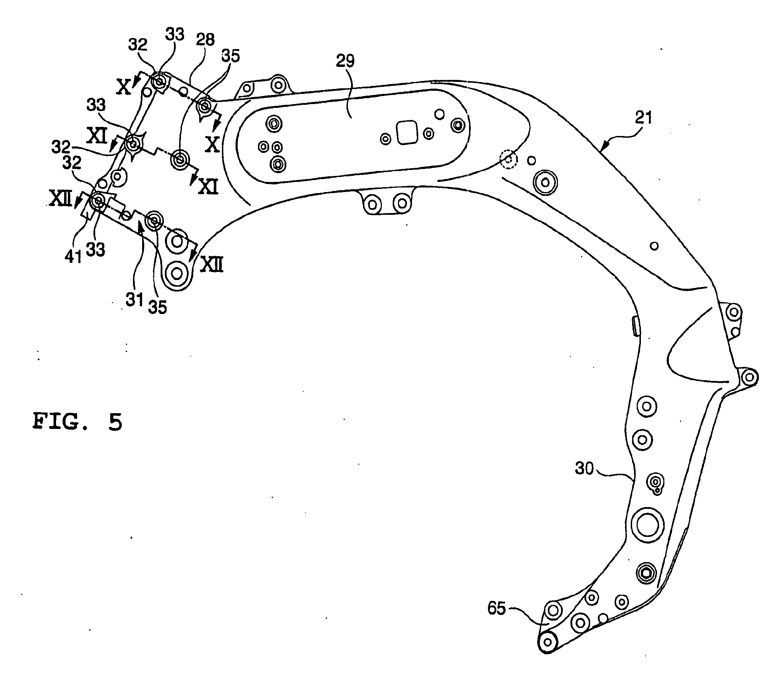

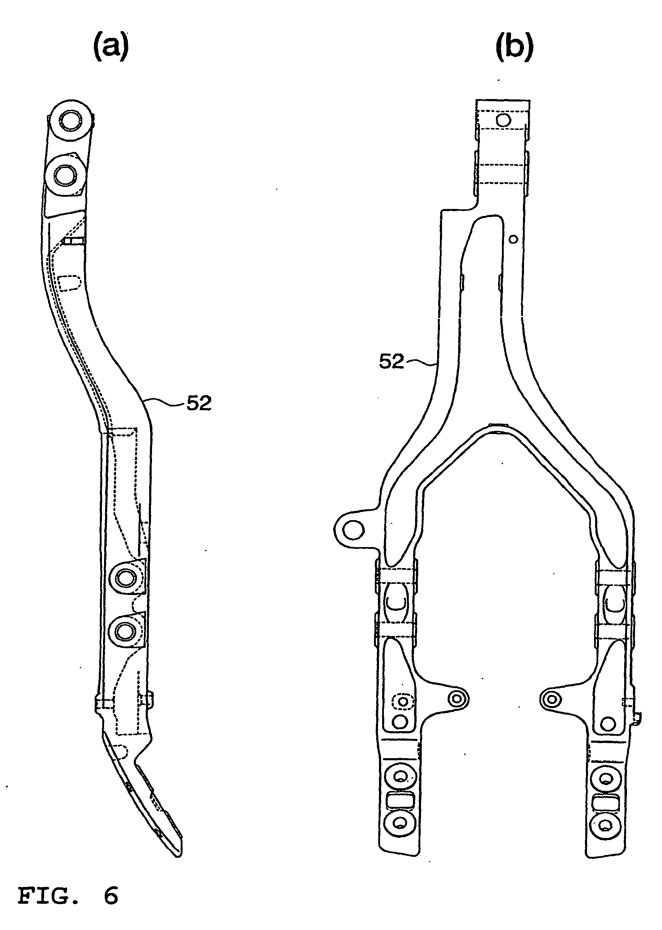

Fig. 1 is a side view of the motorcycle according to the embodiment, and Fig. 2 is a front elevation view of the same. Fig. 3 is a top plan view of the body frame employed in the motorcycle according to the embodiment, and Fig. 4 is a side view of the same. Fig. 5 is a side view of the main frame member. Fig. 6 illustrates a front half of a down tube, with Fig. 6(a) being its side view, and Fig. 6(b) being its rear view.

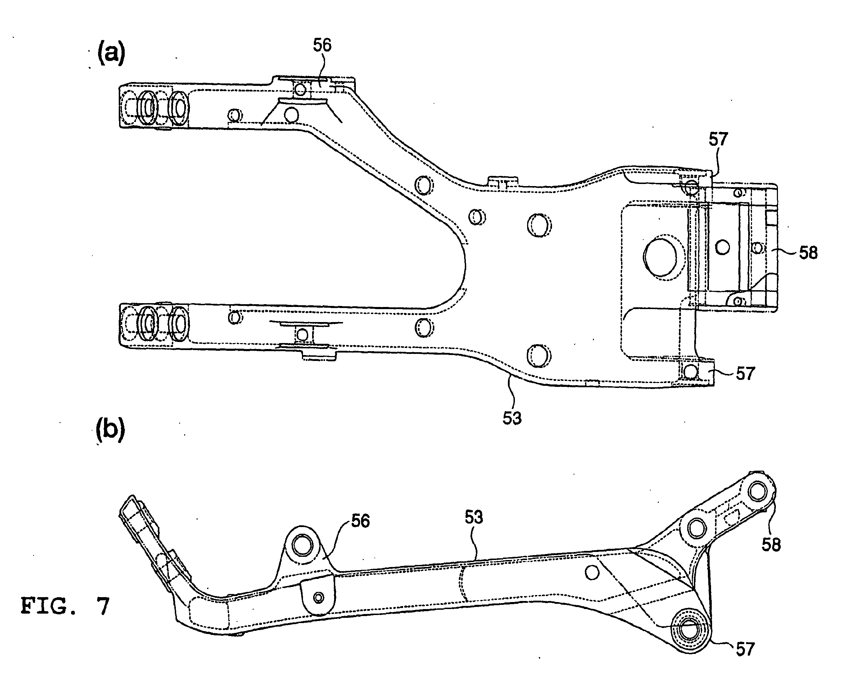

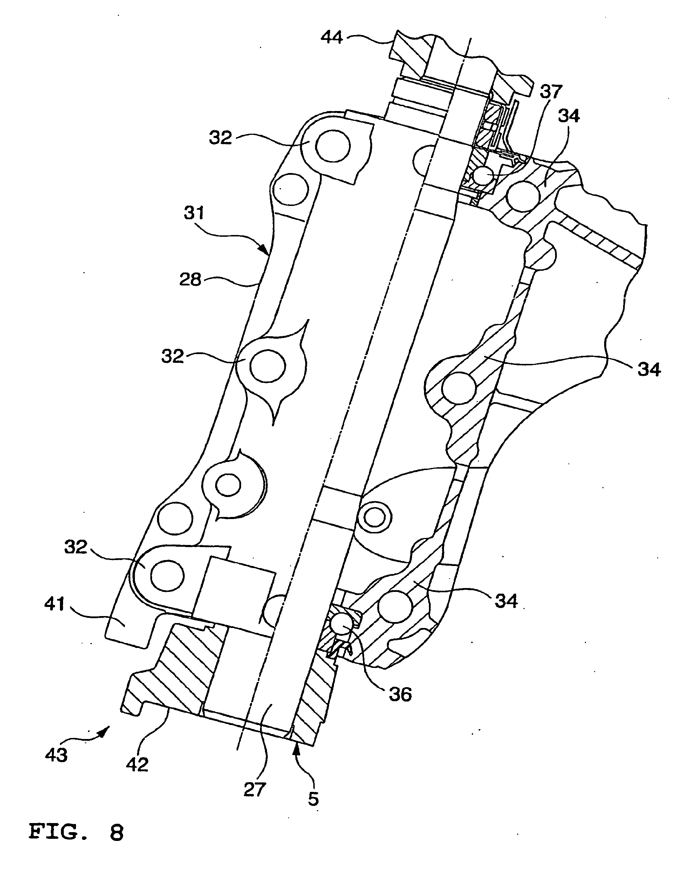

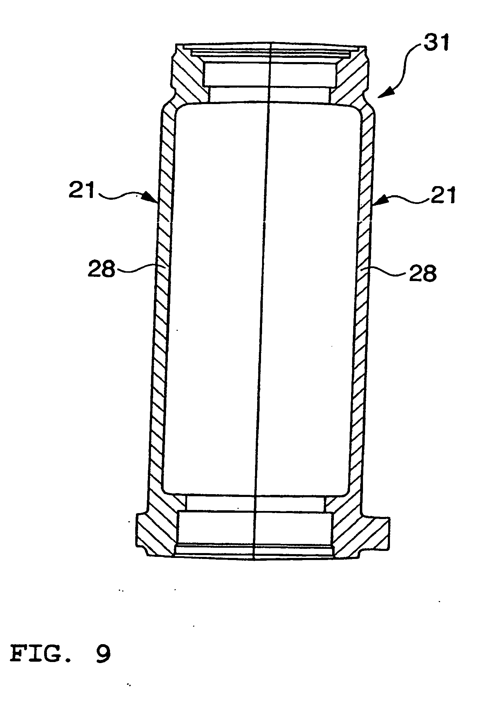

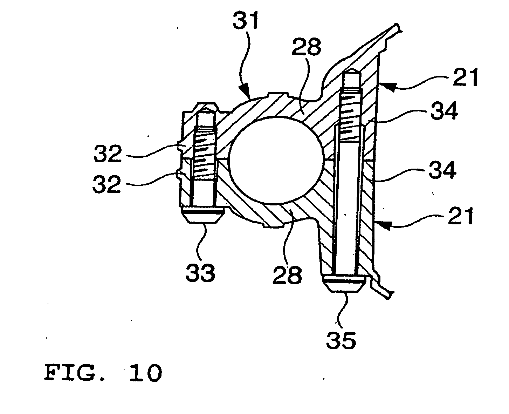

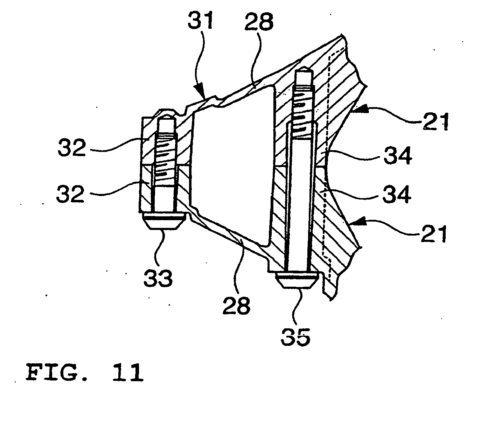

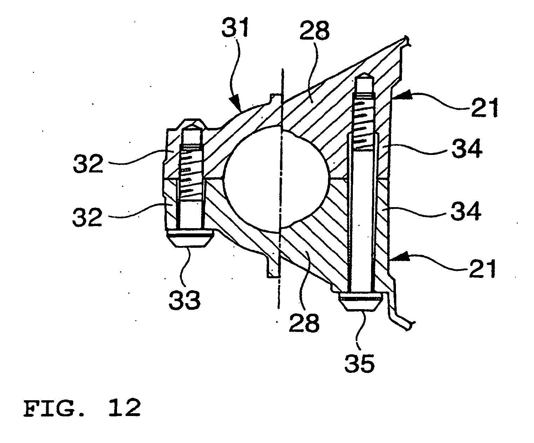

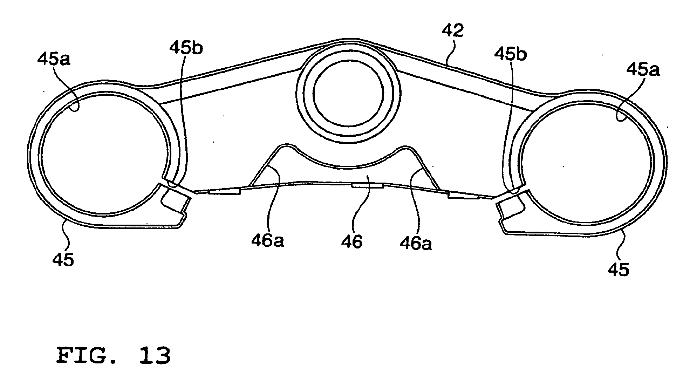

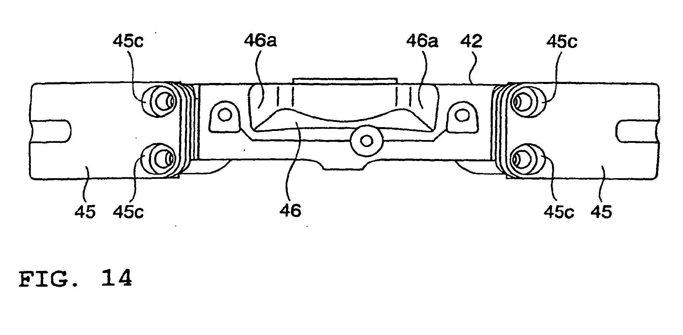

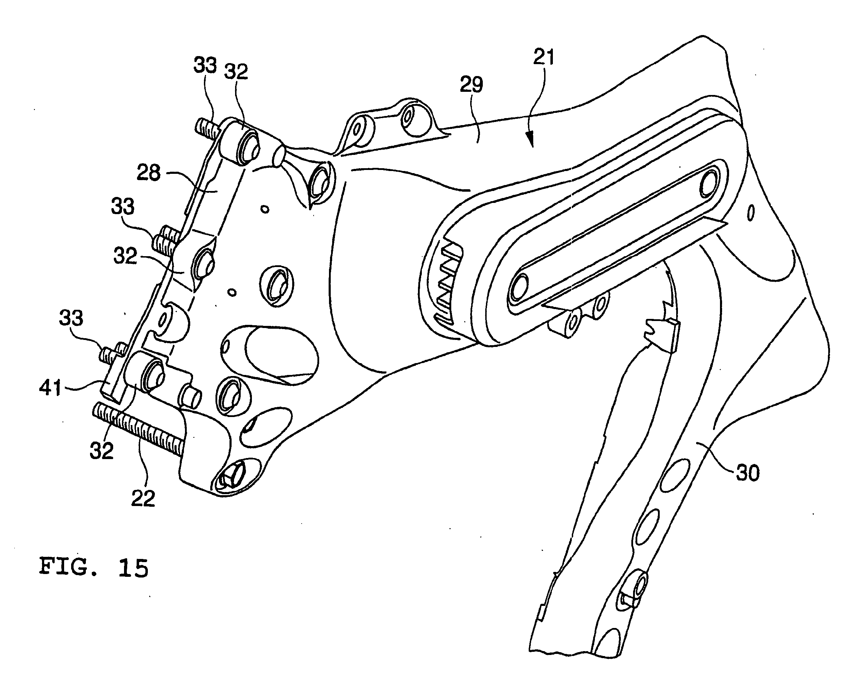

Fig. 7 illustrates a rear half of the down tube, with Fig.7 (a) being its top plan view, and Fig. 7 (b) being its side view. Fig. 8 is an enlarged view of the head pipe portion in which the body's rearward part of the head pipe from the steering shaft centerline is illustrated as a cutaway view. Fig. 9 is a cross-sectional view of parts of exhibit Fig. 5. Fig. 10 is a cross-sectional view along the line X-X of a head pipe half in Fig. 5. Fig. 11 is a cross-sectional view along the line XI-XI of the head pipe half in Fig. 5. Fig. 12 is a cross-sectional view along the line XII-XII of the head pipe half in Fig. 5. Fig. 13 is a top plan view of the underbracket. Fig. 14 is a front elevation view of the underbracket. Fig. 15 is a perspective view of a main frame member.

In these drawings, the object indicated with reference numeral 1 refers to a motorcycle according to this embodiment. Regarding the motorcycle 1, a muffler cover 3 is disposed in an elevated position adjacent to the lower part on the side of a seat 2, so that it is prominent in the sideway view of the motorcycle 1. Reference numeral 4 denotes a front wheel of the motorcycle 1; 5 a front fork; 6 a head light; 7 steering handle bars; 8 a body frame; 9 a fuel tank; 10 an engine; 11 a rear wheel; 12 a rear arm; and 13 an exhaust pipe. The engine 10 of the motorcycle 1 is a V-shaped 2-cylinder engine configured in the manner that a forward cylinder 15 and a rearward cylinder 16 on the motorcycle body extend from the top end of the crankcase 14 taking a "V" shape in the side view as shown in Fig. 1.

As shown in Fig. 3 and Fig. 4, the body frame 8 of the motorcycle 1 is so-called "cradle type" that encircles the engine 10 as it is viewed from the sides of the motorcycle body. The body frame 8, having a separate-type construction with right and left pieces, includes a pair of right and left main frame members 21, 21 formed to have a specified shape by casting, a down tube 23 joined to the main frame member 21 by a connecting bolt 22, a rear frame 25 joined to the rear end of the main frame member 21 by a connecting bolt 24 (see Fig. 3), a cross member 26 transversely bridging the center portions of the two main frame members 21, and so on. The main frame member 21 and the rear frame 25 are made of aluminum base alloy and formed to have a specified shape by die casting. The rear frame 25 is disposed inside of the muffler cover 3, extending from the main frame member 21 toward the rear end of the motorcycle body.

For each of the main frame member 21 on the left part of the motorcycle body and the main frame member 21 of the right part of the motorcycle body, are formed in one body a head pipe half 28 for rotatationally supporting the steering shaft 27 (see Fig. 8) of the front fork 5, a main frame 29 extending rearward of the motorcycle body from the head pipe half 28, and a rear arm bracket 30 extending downward from the main frame 29 for supporting the rear arm 12.

Each head pipe half 28, as shown in Figs. 9 through 12, has "U" shape cross section with its opening oriented toward the transverse center of the motorcycle body. In other words, each head pipe 28 is formed so that the left half and the right half are joined with each other to constitute a head pipe 31.

The left and the right head pipe halves 28, 28 are joined by connecting each of the three corresponding fastening portions 32 provided at the front end of each head pipe half 28 with a connecting bolt 33, and at the same time connecting each of the three corresponding fastening portions 34 provided at the rear end of each head pipe half 28 with a connecting bolt 35, as shown in Figs. 5, 8, and 15.

In the head pipe 31 according to this embodiment, bearings 36 and 37 (See Fig. 8) for supporting the steering shaft are fitted inside of the upper end portion and the lower end portion respectively, in the course of the connecting process described above. These bearings 36, 37 are sandwiched in a tightly held condition between both head pipe halves 28, 28.

In addition, the head pipe half 28 supports a headlight 6 via a stay (not shown). The head light 6 is equipped so that it is positioned adjacent to and forward of the front end on the head pipe half 28 along the motorcycle body.

A handle stopper body 41 is formed integrally with the lowest front-end fastening portion 32 among the three front-end fastening portions 32 provided on both of head pipe half 28, 28, as shown in Figs. 4, 5, and 8. The handle stopper body 41 comprises a handle stopper 43 of the motorcycle 1 in cooperation with an underbracket 42 of the front folk 5 (see Figs. 1, 2, and 8) which will be described later.

The handle stopper body 41 is formed into a rod shape having a square section by using the die for molding the head pipe half 28, and is projected downward from the bottom end of the lowest front-end fastening portion 32. As shown in Fig. 8, the front end edge of the handle stopper body 41 in the side view is located generally in the same position as the front end edge of the lowest front-end fastening portion 32. In this embodiment, the handle stopper body 41 is formed in the manner that its end surface toward the transverse center of the motorcycle body is in the same plane as the mating face of the head pipe halves 28, 28. The end surface, along with the mating face, is finished to have a flat surface of the specified accuracy. Thus, the handle stopper body 41 provided on the left half 28 of the motorcycle body, and the handle stopper body 41 provided on the right half 28 of the head pipe of the motorcycle body will have the end surfaces tightly fit with each other as both halves 28, 28 are combined. Consequently, one half reinforces the other half when the external force is exerted on them in the transversal direction.

As shown in Figs. 1 and 2, the underbracket 42 is provided for supporting a pair of right and left outer tubes 5a of the front fork 5 in conjunction with an upper bracket 44. The underbracket is firmly fixed to the lower end portion of the steering shaft 27, as shown in Fig. 8. The underbracket 42 is fabricated by machining a forged blank of the underbracket. As shown in Figs. 13 and 14, a damp 45 is formed at its both ends having a structure that wrappingly holds the outer tube 5a, and a recess 46 is formed at its center which opens to the upward and to the forward of the motorcycle body. The machining on the underbracket 42 is performed on an outer tube bore 45a of the clamp 45, a cutout 45b, a bolt hole 45c, and so on. No machining is provided on the surface of recess 46.

The recess 46 is formed in the position below the handle stopper body 41, with the handle stopper body 41 directly looking down on the recess from above. As shown in Fig. 13, the transverse width for the opening of the recess 46 is gradually increased toward the front of the motorcycle body. Describing more in detail, both right and left side walls 46a, 46a in the recess 46 extend vertically, and at the same time they are formed to open toward the front of the motorcycle body. When viewed from the top, the recess 46 is formed to open at an angle generally equal to the maximum angle to which the front fork 5 can be turned around. The recess having such side walls constitute an engagement section in the meaning of the present specification. Namely, the handle stopper 43 composed of the recess 46 and the handle stopper body 41 restricts the turning motion of the front fork 5, as the side wall 46a abuts on the handle stopper body 41 when the front fork 5 is turned relative to the head pipe half 28 around the steering shaft 27.

The main frame 29 is formed to have horseshoe-shape section that opens toward the transverse center of the motorcycle body, reinforcement ribs (not shown) are standingly provided. The main frame 29 with the main frame member 21 on the left part of the motorcycle body, and the main frame 29 with the main frame member 21 on the right part of the motorcycle body are formed to separate each other to the left and to the right part of the motorcycle body in the rear vicinity of the head pipe portion. The separate main frames 29, 29 are connected with each other by the cross member 26 (see Fig. 3). The cross member 26 is secured to the main frame 29 at its both ends by a fastening bolt 26a (see Fig. 4). As shown in Fig. 4, both the main frames 29, 29 are equipped with a stay 51 in their lower end area for supporting the engine, thus supporting the upper end of both cylinders 15, 16 via the stay 51. The fuel tank 9 is secured to and supported by the main frame 29.

As shown in Fig. 4, the down tube 23 is composed of the front half 52 that is vertically extending in the forward of the engine 10, and the rear half 53 that is extending in the fore-and-aft direction below the engine 10. By the way, the down tube 23 according to this embodiment is not constructed with a tubular material, but is called down tube in this specification because it has the function equivalent to the down tube found in the typical cradle type frame.

The front half 52 and the rear half 53 of the down tube 23 are connected with each other by a connecting bolt 54. The top end of the front half 52 is connected to the lower end of the head pipe half 28 by the connecting bolt 22. The rear end of the rear half 53 is connected to the lower end of the rear arm bracket 30 by the connecting bolt 22.

The front half 52 of the down tube 23 is forged to have a specified shape. As shown in Figs. 1 and 4, the front half 52 is formed generally along with the front edge line of the engine when viewed from the side of the motorcycle body, and formed into Y-shape which is split open to the downward direction as shown in Fig. 6(b). The upper end of the front half 52 is tucked between the main frame member 21 (the head pipe half 28) on the left part of the motorcycle body and the main frame member 21 (the head pipe half 28) on the right part of the motorcycle body, and tightened up by the two connecting bolts 22, 22 penetrating these parts. In other words, the upper end is clamped between the pair of right and left main frame members 21, 21.

As shown in Fig. 4, the lower part of the front half 52 is equipped with a bracket 55 for supporting the engine. Thus the lower part of the front half 52 supports the front end of the crankcase 14 via the bracket 55.

The joint area for the bottom end of the front half 52 and the forward end of the rear half 53 has a structure as shown in Fig. 4 that the rear half 53 is placed on top of the front half, and they are tightened up together by the connecting bolt 54.

The rear half 53 of the down tube 23 is cast into Y-shape which is open to the forward direction as shown in Fig. 7. Inside of the down tube 23 is formed to be hollow. A bracket 56 is formed integrally with the forward portion of the rear half 53. The bottom end in the forward portion of the crankcase 14 is supported by the bracket 56. A bracket 57 for connecting a suspension (cushion) unit and a bracket 58 for connecting the rear arm bracket are provided in a projected manner at the rear end of the rear half 53. The bracket 57 for connecting the suspension unit is formed as a pair of right and left brackets. The bracket 58 for connecting the rear arm bracket is formed in the transverse center of the motorcycle body, extending transversely and in the fore-and-aft direction.

The forward end of a rear suspension unit 59 is rotatably connected to the suspension unit joint bracket 57, as shown in Fig. 4. The rear end portion of the rear suspension unit 59 is connected via a linkage 60 to the downward projection 61 of the rear arm 12. The bracket 58 for connecting the rear arm bracket 30 is tucked between the rear arm bracket 30 on the left part of the motorcycle body and the rear arm bracket 30 on the right part of the motorcycle body, and tightened up by the two connecting bolts 22, 22 penetrating these parts. In other words, the rear end of the rear half 53 of the down tube 23 is clamped between the pair of right and left rear arm brackets 30, 30.

Similar to the main frame 29, the rear arm bracket 30 is formed to have horseshoe-shape section that opens toward the transverse center of the motorcycle body. Reinforcement ribs are provided inside of the horseshoe-shape section. The rear arm bracket 30 swingably supports the rear arm 12 by a pivotal shaft 30a. The rear arm bracket 30 on the left part of the motorcycle body and the rear arm bracket 30 on the right part of the motorcycle body are connected with each other by a connecting bolt 63 located in the lower vicinity of a rear arm supporting portion 62 (see Fig. 4).

In addition, the rear arm bracket 30 supports the rear end area of the crankcase 14 by a supporting bracket 64 attached to its upper end portion, and a protrusion 65 provided at its bottom end portion, as shown in Fig. 4. The supporting bracket 64 is tucked between the pair of rear arm brackets 30, and is tightened up by bolts 66 penetrating these parts. The supporting bracket 64 is attached to the crankcase 14 by a bolt 67. The protrusion 65 is tightened up onto the crankcase 14 by a bolt 68 penetrating the crankcase 14. Thus, both of the rear arm brackets 30 are connected with each other at the engine supporting area via the supporting bracket 64 and the engine 10.

In the motorcycle 1 constructed in the manner described above, the handle stopper body 41 is disposed to protrude downward from the head pipe half 28, on the front-end fastening portion 32 protruding from the head pipe half of the right and left separate-type body frame 8. Further, the recess for engaging the handle stopper 41 (the engagement section) is provided on the underbracket 42 for the front fork 5. Having such structure, the handle stopper body 41 can be provided by utilizing the fastening portion 32 which is essential for assembling the right and left separate-type body frame. The handle stopper body 41 is offset forward from the head pipe 31 by the fore-and-aft length of the front-end fastening portion 32, then, extends downward from the offset position. Thus, the tip of the handle stopper body 41 in the fore-and-aft direction may be positioned in line with the front end fastening portion 32 in the motorcycle 1.

Consequently, in the motorcycle 1 according to this embodiment, the handle stopper body 41 does not unnecessarily protrude forward of the motorcycle body. This enables the head light to be mounted closer to the body frame 8, while employing the right and left separate-type body frame 8.

This embodiment has the handle stopper body 41 on each of the pair of front end fastening portions 32, 32. However, the handle stopper body 41 may be provided in only one of the front end fastening portions 32. The motorcycle 1 according to this invention employs the construction that the handle stepper body 41 is provided in each of the front end fastening portion 32 on the left part of the motorcycle body and the front end fastening portion 32 on the right part of the motorcycle body, with the left side face of the handle stopper body 41 on the left part of the motorcycle body and the right side face of the handle stopper body 41 on the right part of the motorcycle body being engaged with the engagement section that includes two steps separately provided on the front fork 5 (both side walls 46a, 46a in the recess 46). Thus, the load exerted by the front fork 5 on the handle stopper body 41 does not work in the direction of separating the mating face of a pair of the right and left head pipe halves 28, 28. This enables the body frame rigidity to be maintained at a high level.

This embodiment has the handle stopper body 41 on the left part of the motorcycle body and the handle stopper body 41 on the right part of the motorcycle body being contacted with each other. However, the handle stopper body 41 may be separated from each other. In the case of motorcycle 1 according to this embodiment, the handle stopper body 41 on the left part of the motorcycle body and the handle stopper body 41 on the right part of the motorcycle body contacts with each other. Thus, the load exerted by the front fork 5 on one handle stopper body 41 is in part received by the other handle stopper body 41. This enables the handle stopper 43 to be constructed with a higher rigidity.

In this embodiment, the mating face of the handle stopper body 41 on the left part of the motorcycle body to the handle stopper body 41 on the right part of the motorcycle body is aligned on the identical place with the mating face of the head pipe half 28 on the left part of the motorcycle body to the head pipe half 28 on the right part of the motorcycle body. However, the mating face of the two handle stopper bodies 41, 41 may be offset to a position not aligned with the mating face of the two halves of the head pipe 28, 28 in the transversal direction of the motorcycle body. In the case of motorcycle 1 according to this embodiment, the contact face for abutting the handle stopper body 41 on the left part of the motorcycle body and the handle stopper body 41 on the right part of the motorcycle body is aligned in the identical plane with the mating face of the head pipe half 28 on the left part of the motorcycle body and the head pipe half 28 on the right part of the motorcycle body. This facilitates the machining, because the mating faces of the handle stopper body 41 on the left part of the motorcycle body and the handle stopper body 41 on the right part of the motorcycle body may be machined simultaneously with the mating faces of the half part of head pipe 28 on the left part of the motorcycle body and the head pipe half 28 on the right part of the motorcycle body.

In the motorcycle 1 according to this embodiment, the handle stopper body 41 of the handle stopper 43 is protruded downward from the head pipe 31, enabling the handle stopper body 41 to be disposed closer to the underbracket 42 of the front fork 5 located beneath the head pipe half 28. Thus, the handle stopper body 41 can be formed in a small and simple shape.

In the motorcycle 1 according to this embodiment, the handle stopper body 41 is formed to protrude downward from the head pipe half 28, and the engagement section for the handle stopper 43 is composed of the recess 46 being opened in upward and forward direction. This enables the underbracket 42 including the engagement section for the handle stopper 43 to be produced by forging. In addition, the handle stopper 41 can be formed integrally with the head pipe half 28 by casting. These factors allow the production of the handle stopper 43 without machining or welding, and without using any separate part besides the head pipe half 28 and the underbracket 42.

In the motorcycle 1 according to this embodiment, the handle stopper 41 is provided in the lower front end of the head pipe half 28. However, the handle stopper 41 may be provided in the lower rear end, in the upper front end, or in the upper rear end of the head pipe half 28. When the handle stopper body 41 is provided in the upper end of the head pipe half 28, the engagement section is furnished in the upper bracket 44 of the front fork 5. Whether it is provided in the underbracket 42 or in the upper bracket 44, the engagement section may be constructed as a projection disposed in a protruding condition on the top face of the underbracket 42, or on the bottom face of the upper bracket 44.

The description above discloses (amongst other), as a most preferred embodiment, a motorcycle including a connecting section for joining a head pipe half on the left part of the motorcycle body and a head pipe half on the right part of the motorcycle body, the connecting section having a fastening portion provided on each head pipe half in a protruding manner in fore-and-aft direction, and connecting bolts penetratingly inserted into the fastening portions. Further in such motorcycle, a handle stopper body is provided in a protruding manner at the connecting section and projecting vertically from the fastening portion, and the engagement section is provided on the front fork to which the handle stopper body is engaged.

Accordingly, the handle stopper body can be disposed in the offset position forward from the head pipe half by the fore-and-aft length of the fastening portion provided on the right and left separate-type body frame. The handle stopper body protrudes vertically from the fastening portion. Thus, the end of the handle stopper body in fore-and-aft direction can be set at generally the same position as the fastening portion. Consequently, the handle stopper body does not protrude needlessly in fore-and-aft direction of the motorcycle body. This enables the headlight to be disposed closer to the body frame, while employing the right and left separate-type body frame, attaining the compact motorcycle body in the fore-and-aft direction.

This most preferred embodiment might be further improved if the handle stopper body is provided on each of the fastening portions on the right side and the left part of the motorcycle body, and if the left side face of the handle stopper body on the left part of the motorcycle body and the right side face of the handle stopper body on the right part of the motorcycle body are engaged with the engagement section composed of steps separately provided at two places on the front fork.

Accordingly, the load exerted by the front fork on the handle stopper body does not work in the direction of separating the mating face of a pair of right and left head pipe halves.

The afore-discussed embodiment might be even further improved if the handle stopper body on the left part of the motorcycle body, and the handle stopper body on the right part of the motorcycle body are in contact with each other.

Accordingly, the load exerted by the front fork to one handle stopper body is in part received by the other handle stopper body, enabling to construct the handle stopper with a higher rigidity.

Therein, it might be still further beneficial if the mating face of the handle stopper body on the left part of the motorcycle body and the same on the right part of the motorcycle body is aligned in the identical plane with the mating face of the head pipe half on the left part of the motorcycle body and the same on the right part of the motorcycle body.

Accordingly, the mating faces of the handle stopper body on the left part of the motorcycle body and the handle stopper body on the right part of the motorcycle body may be machined simultaneously with the mating faces of the head pipe half on the left part of the motorcycle body and the head pipe half on the right part of the motorcycle body, facilitating the machining process.

According to another one of the afore-discussed embodiments, the handle stopper body protrudes downward from the fastening portion, and the engagement section is provided on the underbracket of the front fork.

Accordingly, the handle stopper body can be disposed closer to the underbracket of the front fork located beneath the head pipe half. Thus, the handle stopper body 41 can be formed in a small and simple shape, which facilitates the production process and is useful for the cost reduction.

Therein, it might be further beneficial if the handle stopper body is formed to protrude downward from the head pipe half, and the engagement section to engage with the handle stopper body has a recess formed in the underbracket of the front fork and open upward, with the handle stopper body being inserted in it from above.

Accordingly, the underbracket including the engagement section can be produced by forging. In addition, the handle stopper can be formed integrally with the head pipe half by casting. These factors allow the production of the handle stopper without machining or welding, and without using any separate part besides the head pipe half and the underbracket. Thus, this embodiment is particularly useful for further cost reduction.

Thus, according to a preferred embodiment, in order to provide a compact motorcycle body in the fore-and-aft direction by disposing a headlight closer to the body frame, while employing the right and left separate-type body frame, it is particularly beneficial to construct a head pipe in the right and left separate-type body frame 8 with a head pipe half 28 on the left part of the motorcycle body, and a head pipe half 28 on the right part of the motorcycle body. The connecting section for joining these head pipe halves is composed of a fastening portions provided on both head pipe halves 28 in a protruding manner in the fore-and-aft direction (front end fastening portion 32), and a connecting bolt 33 penetratingly inserted into these fastening portions. A handle stopper body 41 is provided in a protruding manner at the connecting section and projecting downward from the fastening portion. The engagement section to which the handle stopper body 41 is engaged with (a recess 46) is provided on an underbracket 42 of a front fork 5.

## Claims

1. Motorcycle (1) comprising a body frame (8) and a steering angle restricting means which comprises a handle stopper body (41) projecting from a head pipe (31) of the body frame (8) and a recessed engagement section (46) formed in a front fork (5) and being engageable with the handle stopper body (41), said body frame (8) comprises a right and left separate-type body frame (8), wherein the handle stopper body (41) of the steering angle restricting means is projecting from a fastening portion (32,34) of a connecting section of the body frame (8), **characterized in that** the connecting section is joined to a head pipe half (28) on a left part of the motorcycle body and a head pipe half (28) on a right part of the motorcycle body, the connecting section having the fastening portion (32,34) provided on each head pipe half (28) in a protruding manner in fore-and-aft direction, and connecting bolts (33,35) penetratingly inserted into the fastening portions (32,34).

2. Motorcycle according to claim 1, **characterized in that** the head pipe (28) is formed so that the left half and the right half are joined with each other to constitute the head pipe (31), wherein the left and the right head pipe halves (28,28) are joined by connecting each of a plurality of corresponding fastening portions (32) provided at the front end of each head pipe half (28) with a connecting bolt (33), and at the same time connecting each of a plurality of corresponding fastening portions (34) provided at the rear end of each head pipe half (28) with a connecting bolt (35).

3. Motorcycle according to claim 2, **characterized in that** the handle stopper body (41) is formed integrally with a lowest front-end fastening portion (32) among the plurality of front-end fastening portions (32) provided on both of the head pipe halves (28,28).

4. Motorcycle according to claim 2 or 3, **characterized in that** the handle stopper body (41) is provided in a protruding manner at the connecting section and projecting vertically from the fastening portion, and the engagement section is provided in the front fork (5) that the handle stopper body (41) engages.

5. Motorcycle according to one of the claims 1 to 4, **characterized in that** the handle stopper body (41) is provided on each of the fastening portions (32,34) on the right part and the left part of the motorcycle body.

6. Motorcycle according to claim 5, **characterized in that** the left side face of the handle stopper body (41) on the left part of the motorcycle body and the right side face of the handle stopper body (41) on the right part of the motorcycle body are engaged with the engagement section (46) that includes two steps separately provided in the front fork (5).

7. Motorcycle according to claim 5 or 6, **characterized in that** the handle stopper body (41) on the left part of the motorcycle body and the handle stopper body (41) on the right part of the motorcycle body are in contact with each other.

8. Motorcycle according to one of the claims 1 to 7, **characterized in that** a contact face for abutting the handle stopper body (41) on the left part of the motorcycle body and the same on the right part of the motorcycle body is aligned in the identical plane with the mating face of the head pipe half (28) on the left part of the motorcycle body and the same on the right part of the motorcycle body.

9. Motorcycle according to one of the claims 1 to 8, **characterized in that** the engagement section (46) is provided on an underbracket (42) of the front fork (5).

10. Motorcycle according to claim 9, **characterized in that** the handle stopper body (41) is formed to protrude downward from the head pipe half (28), and the engagement section (46) to engage with the handle stopper body (41) has a recess (46) formed in the underbracket (42) of the front fork (5) and opening upward, with the handle stopper body (41) being inserted in it from above.

## Patentansprüche

1. Motorrad (1), aufweisend einen Karosserierahmen (8) und eine Lenkwinkel- Begrenzungseinrichtung, die aufweist einen Handgriffanschlagskörper (41), der von einem Kopfrohr (31) des Karosserierahmens (8) vorspringt, und einen ausgesparten Eingriffsabschnitt (46), gebildet in einer Vordergabel (5) und die mit dem Handgriffanschlagskörper (41) in Eingriff bringbar ist, wobei der Karosserierahmen (8) einen rechten und linken Karosserierahmen (8) vom getrennten- Typ aufweist, der Handgriffanschlagskörper (41) der Lenkwinkel- Begrenzungseinrichtung von einem Befestigungsabschnitt (32, 34) eines Verbindungsabschnittes (32, 34) des Karosserierahmens (8) vorspringt, **dadurch gekennzeichnet, dass** der Verbindungsabschnitt mit einer Kopfrohrhälfte (28) an einem linken Teil der Motorradkarosserie und einer Kopfrohrhälfte (28) an einem rechten Teil der Motorradkarosserie verbunden ist, der Verbindungsabschnitt den Befestigungsabschnitt (32, 34) hat, vorgesehen an jeder Kopfrohrhälfte (28) in einer vorspringenden Weise in einer nach Vorwärts- Rückwärts- Richtung, und Verbindungsschrauben (33, 35), die in die Befestigungsabschnitte (32, 34) durchdringend eingesetzt sind.

2. Motorrad nach Anspruch 1, **dadurch gekennzeichnet, dass** das Kopfrohr (28) derart gebildet ist, dass die linke Hälfte und die rechte Hälfte miteinander verbunden sind, um das Kopfrohr (31) zu bilden, wobei die linke und die rechte Kopfrohrhälfte (28, 28) durch Verbinden jeweils einer Mehrzahl von entsprechenden Befestigungsabschnitten (32) verbunden werden, vorgesehen an dem vorderen Ende jeder Kopfrohrhälfte (28) mit einer Verbindungsschraube (33), und zu derselben Zeit jeder einer Mehrzahl von entsprechenden Befestigungsabschnitten (34) an dem hinteren Ende jeder Kopfrohrhälfte (28) mit einer Verbindungsschraube (35) versehen ist.

3. Motorrad nach Anspruch 2, **dadurch gekennzeichnet, dass** der Handgriffanschlagskörper (41) einstückig gebildet ist mit einem untersten vorderen Endbefestigungsabschnitt (32) zwischen der Mehrzahl von vorderen Endbefestigungsabschnitten (32), vorgesehen an beiden der Kopfrohrhälften (28, 28).

4. Motorrad nach Anspruch 2 oder 3, **dadurch gekennzeichnet, dass** der Handgriffanschlagskörper (41) in einer vorspringenden Weise an dem Verbindungsabschnitt vorgesehen ist und vertikal von dem Befestigungsabschnitt vorspringt, und der Eingriffsabschnitt in der Vordergabel (5) vorgesehen ist, mit dem der Handgriffanschlagskörper (41) im Eingriff ist.

5. Motorrad (1) nach einem der Ansprüche 1 bis 4, **dadurch gekennzeichnet, dass** der Handgriffanschlagskörper (41) an jedem der Befestigungsabschnitte (32, 34) an dem rechten Teil und dem linken Teil der Motorradkarosserie vorgesehen ist.

6. Motorrad (1) nach Anspruch 5, **dadurch gekennzeichnet, dass** die linke Seitenfläche des Handgriffanschlagskörpers (41) an dem linken Teil der Motorradkarosserie und die rechte Seitenfläche des Handgriffanschlagskörpers (41) an dem rechten Teil der Motorradkarosserie mit dem Eingriffsabschnitt (46), der zwei Stufen enthält, separat in der Vordergabel (5) vorgesehen, im Eingriff sind.

7. Motorrad (1) nach Anspruch 5 oder 6, **dadurch gekennzeichnet, dass** der Handgriffanschlagskörper (41) an dem linken Teil der Motorradkarosserie und der Handgriffanschlagskörper (41) an dem rechten Teil der Motorradkarosserie miteinander in Kontakt sind.

8. Motorrad (1) nach einem der Ansprüche 1 bis 7, **dadurch gekennzeichnet, dass** eine Kontaktfläche zum Anschlag des Handgriffanschlagskörpers (41) an dem linken Teil der Motorradkarosserie und dieselbe an dem rechten Teil der Motorradkarosserie in der identischen Ebene mit der Passfläche der Kopfrohrhälfte (28) an dem linken Teil der Motorradkarosserie und derselben an dem rechten Teil der Motorradkarosserie ausgerichtet ist.

9. Motorrad (1) nach einem der Ansprüche 1 bis 8, **dadurch gekennzeichnet, dass** der Eingriffsabschnitt (46) an einem unteren Halter (42) der Vordergabel (5) vorgesehen ist.

10. Motorrad (1) nach Anspruch 9, **dadurch gekennzeichnet, dass** der Handgriffanschlagskörper (41) gebildet ist, um nach unten von der Kopfrohrhälfte (28) vorzuspringen und der Eingriffsabschnitt (46), um mit dem Handgriffanschlagskörper (41) im Eingriff zu sein, eine Aussparung (46) hat, gebildet in dem unteren Halter (42) der Vordergabel (5) und die sich nach oben öffnet, wobei der Handgriffanschlagskörper (41), in diese von oben eingesetzt ist.

## Revendications

1. Motocycle (1) comprenant un cadre (8) et des moyens limiteurs d'angle de braquage qui comprennent un corps de butée de poignée (41) qui dépasse d'un tube avant (31) du cadre (8) et une partie d'emboîtement renfoncée (46) qui est formée dans une fourche avant (5) et qui est apte à être accouplée avec le corps de butée de poignée (41), le cadre (8) comprenant un cadre du type séparé à parties droite et gauche (8), et le corps de butée de poignée (41) des moyens limiteurs d'angle de braquage dépassant d'une partie de fixation (32, 34) d'une partie de liaison du cadre (8), **caractérisé en ce que** la partie de liaison est reliée à une moitié de tube avant (28) sur une partie gauche du corps de motocycle et à une moitié de tube avant (28) sur une partie droite du corps de motocycle, la partie de liaison ayant la partie de fixation (32, 34) qui est disposée sur chaque moitié de tube avant (28) de manière à dépasser dans une direction avant-arrière, et des chevilles de liaison (33, 35) qui sont complètement introduites dans les parties de fixation (32, 34).

2. Motocycle selon la revendication 1, **caractérisé en ce que** le tube avant (28) est formé de telle sorte que la moitié gauche et la moitié droite sont assemblées pour former le tube avant (31), étant précisé qu'on assemble les moitiés de tube avant gauche et droite (28, 28) en reliant chacune des parties de fixation correspondantes (32) prévues à l'extrémité avant de chaque moitié de tube avant (28) à l'aide d'une cheville de liaison (33), et en reliant en même temps chacune des parties de fixation correspondantes (34) prévues à l'extrémité arrière de chaque moitié de tube avant (28) à l'aide d'une cheville de liaison (35).

3. Motocycle selon la revendication 2, **caractérisé en ce que** le corps de butée de poignée (41) est formé d'une seule pièce avec la partie de fixation d'extrémité avant (32) qui se trouve le plus bas, parmi les parties de fixation d'extrémité avant (32) prévues sur les deux moitiés de tube avant (28, 28).

4. Motocycle selon la revendication 2 ou 3, **caractérisé en ce que** le corps de butée de poignée (41) est disposé de manière saillante sur la partie de liaison et en dépassant verticalement de la partie de fixation, et la partie d'emboîtement est prévue dans la fourche avant (5) dans laquelle le corps de butée de poignée (41) s'emboîte.

5. Motocycle selon l'une des revendications 1 à 4, **caractérisé en ce que** le corps de butée de poignée (41) est prévu sur chacune des parties de fixation (32, 34) sur la partie droite et la partie gauche du corps de motocycle.

6. Motocycle selon la revendication 5, **caractérisé en ce que** la face gauche du corps de butée de poignée (41) sur la partie gauche du corps de motocycle et la face droite du corps de butée de poignée (41) sur la partie droite du corps de motocycle s'emboîtent dans la partie d'emboîtement (46) qui comprend deux gradins disposés séparément dans la fourche avant (5).

7. Motocycle selon la revendication 5 ou 6, **caractérisé en ce que** le corps de butée de poignée (41) sur la partie gauche du corps de motocycle et le corps de butée de poignée (41) sur la partie droite du corps de motocycle sont en contact l'un avec l'autre.

8. Motocycle selon l'une des revendications 1 à 7, **caractérisé en ce qu'**une face de contact pour buter contre le corps de butée de poignée (41) sur la partie gauche du corps de motocycle et une face de contact sur la partie droite du corps de motocycle sont alignées dans le même plan que la face correspondante de la moitié de tube avant (28) sur la partie gauche du corps de motocycle et que la face correspondante sur la partie droite du corps de motocycle.

9. Motocycle selon l'une des revendications 1 à 8, **caractérisé en ce que** la partie d'emboîtement (46) est prévue sur un support inférieur (42) de la fourche avant (5).

10. Motocycle selon la revendication 9, **caractérisé en ce que** le corps de butée de poignée (41) est formé pour dépasser vers le bas à partir de la moitié de tube avant (28), et la partie d'emboîtement (46) destinée à s'emboîter avec le corps de butée de poignée (41) a un creux (46) qui est formé dans le support inférieur (42) de la fourche avant (5) et qui s'ouvre vers le haut, le corps de butée de poignée (41) étant introduit dans ce creux par le haut.
